# EUROPEAN PATENT APPLICATION

(11) **EP 4 767 810 A1**
(43) Date of publication of application: **01.07.2026**
(21) Application number: 25223188.1
(22) Date of filing: 12.12.2025
(51) Int. Cl.: A01D 41/12, A01D 41/127, A01D 43/00

(54) **HARVESTING MACHINE**

(30) Priority: 27.12.2024 JP 2024231557
(71) Applicant: Yanmar Holdings Co., Ltd., Osaka-shi, Osaka (JP)
(72) Inventor: MIZUHATA, Tatsuya, Okayama-shi (JP); KITAOKA, Harumasa, Okayama-shi (JP)
(74) Representative: Sekiguchi, Kazuya

(57) **Abstract**

[Problem] To provide a harvesting machine in which a blind spot is less likely to occur.

[Solution] A harvesting machine 4 includes a machine body 40, a horizontal conveyance path 492, and an antenna device 1. The machine body 40 includes a driving part 47. The horizontal conveyance path 492 has a length along a horizontal plane, is rotatable about a support portion 495 located on a rear side relative to the driving part 47, in plan view, and discharges a harvesting target from an end portion on a side opposite to the support portion 495. The antenna device 1 is supported by the machine body 40. The antenna device 1 is disposed at a position between the driving part 47 and the support portion 495, in plan view.

## Description

### TECHNICAL FIELD

The present invention relates to a harvesting machine including an antenna device.

### BACKGROUND ART

As a related technique, there is known a harvesting machine (combine) including an antenna device (GPS antenna unit) that receives position information from a satellite and that measures the position of the machine on the basis of the received position information (see, for example, Patent Document 1). In the harvesting machine according to the related technique, the position of the machine measured by the antenna device can be used, for example, in a case of performing automated travel along a target travel path, in a case of performing precision agriculture in which a farm field is managed by associating the quality of a grain with a reaping position, or the like.

The harvesting machine according to the above related technique includes a reaping part disposed at a front part of a machine body, a driving part disposed on a right side in the machine body and rearward of the reaping part, a conveyance device disposed on a left side in the machine body and to the left of the driving part, and a threshing device disposed rearward of the conveyance device. The conveyance device conveys reaped grain culms towards the rear, and the threshing device performs threshing processing on the reaped grain culms conveyed by the conveyance device. A grain storage tank that stores the grains obtained by the threshing processing performed by the threshing device is provided to the right of the threshing device. In this harvesting machine, the antenna device is disposed above a front part of a side portion (portion on the left side), on a side where the conveyance device is located, of the driving part, in a left-right direction, in a left-right directional middle part of the machine body of the harvesting machine. The driving part is provided with a frame supporting the antenna device.

### PRIOR ART DOCUMENT

### PATENT DOCUMENT

Patent Document 1: JP-A-2020-103054

### SUMMARY OF INVENTION

### TECHNICAL PROBLEM

In the configuration of the related technique described above, the antenna device and the frame (supporting the antenna device) are disposed at the front part of the driving part, and thus the view of the operator riding on the driving part may be blocked by the antenna device and the frame, and a blind spot may occur.

It is an object of the present invention to provide a harvesting machine in which a blind spot is less likely to occur.

### SOLUTION TO PROBLEM

A harvesting machine according to one aspect of the present invention includes a machine body, a horizontal conveyance path, and an antenna device. The machine body includes a driving part. The horizontal conveyance path has a length along a horizontal plane, is rotatable about a support portion located on a rear side relative to the driving part, in plan view, and discharges a harvesting target from an end portion on a side opposite to the support portion. The antenna device is supported by the machine body. The antenna device is disposed at a position between the driving part and the support portion, in plan view.

### ADVANTAGEOUS EFFECT OF INVENTION

According to the present invention, it is possible to provide a harvesting machine in which a blind spot is less likely to occur.

### BRIEF DESCRIPTION OF DRAWINGS

Fig. 1 is a schematic left side view of a harvesting machine according to a basic configuration of a first embodiment;
Fig. 2 is a schematic plan view of the harvesting machine according to the basic configuration of the first embodiment;
Fig. 3 is a schematic perspective view of relevant part of a harvesting machine according to the first embodiment;
Fig. 4 is a schematic plan view of relevant part of the harvesting machine according to the first embodiment;
Fig. 5 is a schematic plan view of relevant part of the harvesting machine according to the first embodiment;
Fig. 6 is a schematic left side view of relevant part of the harvesting machine according to the first embodiment;
Fig. 7 is a schematic front view of relevant part of the harvesting machine according to the first embodiment;
Fig. 8 is a schematic perspective view of relevant part of the harvesting machine according to the first embodiment; and
Fig. 9 is a schematic perspective view showing another example of relevant part of the harvesting machine according to the first embodiment.

### DESCRIPTION OF EMBODIMENT

An embodiment of the present invention will be described below with reference to the accompanying drawings. The following embodiment is an example embodying the present invention, and is not intended to limit the technical scope of the present invention.

### (First Embodiment)

### [1] Basic configuration

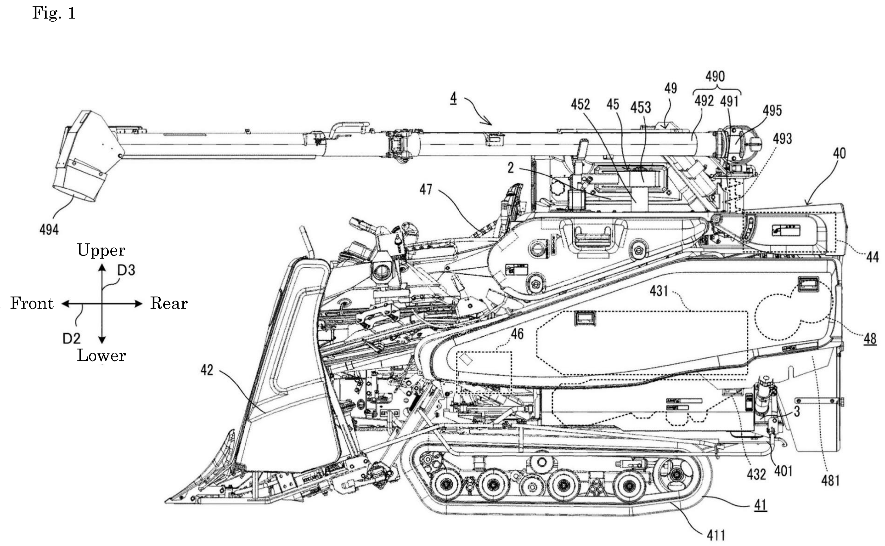

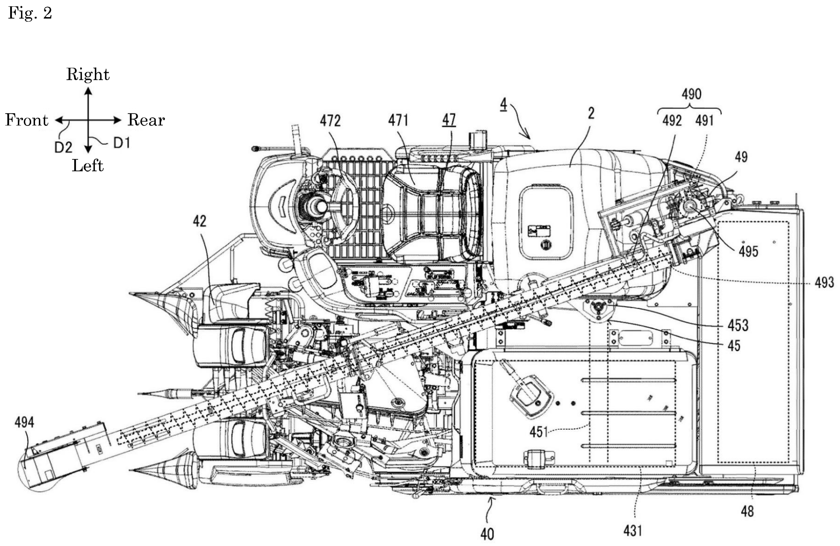

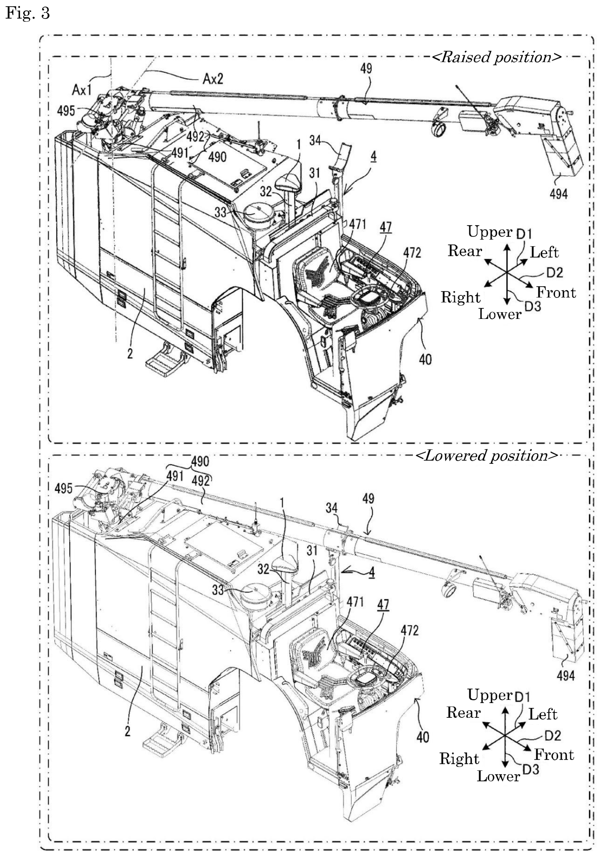

First, a basic configuration of a harvesting machine 4, according to the present embodiment will be described with reference to Figs. 1 and 2. The harvesting machine 4 according to the present embodiment includes an antenna device 1 (see Fig. 3). However, here, a basic configuration of the harvesting machine 4 will be described by taking, as an example, the harvesting machine 4 in a state where the antenna device 1 and peripheral structures such as a support structure of the antenna device 1 are omitted. In addition, the harvesting machine 4 shown in Figs. 1 and 2 is different from the harvesting machine 4 according to the present embodiment shown in Fig. 3 and the like in details in, for example, the capacity and shape of a grain tank 2, but has the basic configuration common to that of the harvesting machine 4 according to the present embodiment.

The harvesting machine 4 according to the present embodiment includes a travel device 41, a reaping part 42, a threshing device 431, a sorting device 432, a conveyance device 45, a power part 46, a driving part 47, a waste straw processing device 48, a waste straw conveyance device 44, a discharge device 49, and the like, in a machine body 40 that is a main body of the harvesting machine 4. In addition, the harvesting machine 4 further includes the grain tank 2 that stores grains, a fuel tank 3, a battery, electrical components, and the like, in the machine body 40.

The "harvesting machine" in the present disclosure refers to a machine that performs harvesting work on crops in a farm field, and examples thereof include a combine (combine harvester) that performs threshing and sorting in addition to the harvesting work, and the like. The combine as the harvesting machine 4 is mainly used for harvesting work on cereal grains. The combine as the harvesting machine 4 reaps a crop while moving (traveling) in the farm field, and harvests the reaped crop. In particular, types of the combine include a normal (general-purpose) combine that feeds the entire reaped crop to a thresher (threshing device 431), and a head-feeding combine that simply feeds the ears of the reaped crop to the thresher. In the present embodiment, the head-feeding combine will be described as an example of the harvesting machine 4.

The harvesting machine 4 of this type supports reaping work on a plurality of rows, and has a work width in accordance with the number of rows that the harvesting machine 4 supports, in the width direction (left-right direction D1). That is, for example, in the case of the harvesting machine 4 supporting reaping work on four rows, the harvesting machine 4 can simultaneously reap the four rows of grain culms at the maximum in the width direction (left-right direction D1). Fig. 2 shows, as an example, a harvesting machine 4 that is a relatively small combine for two rows (two-row reaping) supporting reaping on two rows.

In addition, in the present embodiment, as an example, the harvesting machine 4 is operated by operation (including remote operation) of a person (operator). However, the harvesting machine 4 is not limited thereto, and may be a machine without a person on board, operated by automated driving. Further, in the present embodiment, the harvesting machine 4 is a "vehicle" that travels in the farm field by using the travel device 41, but the harvesting machine 4 is not limited to the "vehicle".

The "farm field" in the present disclosure refers to an area where the harvesting machine 4 performs harvesting work, and includes, for example, a rice field, a field, an orchard, a pasture, or the like in which a crop (agricultural product) that is a harvesting target such as rice, wheat or the like, soybean, buckwheat, or the like is grown. In the present embodiment, description will be made by taking, as an example, a case in which the harvesting target of the harvesting machine 4 is "rice" and the farm field is an outdoor rice field where the rice is grown.

In addition, in the present embodiment, for convenience of description, a vertical direction in a state where the harvesting machine 4 can be used is defined as an upper-lower direction D3. Further, as shown in Fig. 2, the left-right direction D1 and a front-rear direction D2 are defined, on the basis of directions viewed from a person (operator) riding on (the driving part 47 of) the harvesting machine 4. In other words, each direction used in the present embodiment is a direction defined on the basis of the machine body 40 of the harvesting machine 4, and a direction in which the machine body 40 moves when the harvesting machine 4 moves forward is referred to as "front", and a direction in which the machine body 40 moves when the harvesting machine 4 moves backward is referred to as "rear". Similarly, a direction in which a front end portion of the machine body 40 moves when the harvesting machine 4 turns to the right is referred to as "right", and a direction in which the front end portion of the machine body 40 moves when the harvesting machine 4 turns to the left is referred to as "left".

The machine body 40 includes a machine body frame 401 (see Fig. 1), and forms a vehicle body of the harvesting machine 4. In the machine body 40, the reaping part 42, the threshing device 431, the sorting device 432, the conveyance device 45, the power part 46, the driving part 47, the waste straw processing device 48, the waste straw conveyance device 44, the discharge device 49, and the like are mounted.

The travel device 41 can move the machine body 40 of the harvesting machine 4 in the front-rear direction D2 and the left-right direction D1. For example, the harvesting machine 4 performs harvesting work while moving in the farm field such as a rice field or a field. As an example, the harvesting machine 4 may move from an outer side to an inner side in the farm field while turning to the right (or left), and in this case, a movement track of the harvesting machine 4 is a spiral path.

Specifically, the travel device 41 includes a pair of crawlers 411 (crawler tracks) arranged side by side in the left-right direction D1. As an example, the pair of crawlers 411 include an actuator such as a hydraulic motor, and are driven in a state where independent speed change is enabled. That is, the travel device 41 is a crawler-type (tracked) travel device that drives the endless belt-like crawlers 411 with the actuator to cause the machine body 40 to travel.

Therefore, when the pair of crawlers 411 are driven at an equal speed in the forward movement direction, the machine body 40 enters a forward moving state of moving straight toward the front side. When the pair of crawlers 411 are driven at an equal speed in the rearward movement direction, the machine body 40 enters a rearward moving state of moving straight toward the rear side. In addition, when the pair of crawlers 411 are driven at unequal speeds in the forward movement direction, the machine body 40 enters a forward moving and turning state of turning while moving forward. When the pair of crawlers 411 are driven at unequal speeds in the rearward movement direction, the machine body 40 enters a rearward moving and turning state of turning while moving rearward. Moreover, when one of the pair of crawlers 411 is driven in a state where the driving of the other one of the pair of crawlers 411 is stopped, the machine body 40 enters a pivot turning (pivot turn) state. When the pair of crawlers 411 are driven at an equal speed respectively in the forward movement direction and in the rearward movement direction, the machine body 40 enters a spin turning (counter-rotation turn) state. Further, when the driving of the pair of crawlers 411 is stopped, the machine body 40 enters a travel stop state.

The reaping part 42 reaps a crop (rice, as an example, in the present embodiment) in the farm field. The reaping part 42 is disposed at a front of the machine body 40 of the harvesting machine 4, and is coupled to the machine body 40. The reaping part 42, together with the machine body 40, forms the harvesting machine 4. In other words, the harvesting machine 4 according to the present embodiment includes the reaping part 42 and the machine body 40. In a state where the reaping part 42 is provided in the machine body 40, the reaping part 42 forms one of the components of the harvesting machine 4. Grain culms reaped by the reaping part 42 are fed to the threshing device 431 located rearward of the reaping part 42.

The threshing device 431 performs threshing processing on the grain culms reaped by the reaping part 42. In the threshing processing, product to be threshed, including grains is separated from the grain culm. The threshing device 431 performs the threshing processing on the grain culms while conveying the grain culms from a front portion of the threshing device 431 to a rear side, for example. The threshed product after the threshing processing falls from the threshing device 431 to the sorting device 432 on a lower side. On the other hand, the grain culms (straw) after the threshing processing are fed to the waste straw processing device 48.

The sorting device 432 is disposed below the threshing device 431. The sorting device 432 performs sorting processing on the threshed product obtained by the threshing device 431. In the sorting processing, grains are sorted from the threshed product. The sorting device 432 performs the sorting processing on the threshed product while conveying the threshed product from a front portion of the sorting device 432 to a rear side, for example.

Grains (first-class product) held in a first-class-product conveyance chamber of the sorting device 432 are conveyed to the grain tank 2 by the conveyance device 45. On the other hand, grains (second-class product) held in a second-class-product conveyance chamber of the sorting device 432 are conveyed to a threshing cylinder of the threshing device 431 or a second-class-product return port at an upper side of the sorting device 432 by a second-class-product return device, and are sorted again by the sorting device 432 after being threshed or without being threshed.

The conveyance device 45 conveys grains sorted by the sorting device 432 to the grain tank 2, and introduces the grains into the grain tank 2. The conveyance device 45 includes a horizontal conveyance portion 451 (see Fig. 2), a vertical conveyance portion 452 (see Fig. 1), an introduction portion 453, and the like.

The horizontal conveyance portion 451 is a cross-feed screw (screw for the first-class product) that is disposed in the first-class-product conveyance chamber of the sorting device 432, and that conveys the grains (first-class product) held in the first-class-product conveyance chamber along the left-right direction D1. In the present embodiment, as an example, the horizontal conveyance portion 451 is a screw conveyor that conveys the grains threshed by the threshing device 431 to an inlet of the vertical conveyance portion 452.

The vertical conveyance portion 452 connects an outlet of the horizontal conveyance portion 451 and the introduction portion 453 provided on an upper portion of the grain tank 2, and conveys the grains along the upper-lower direction D3. That is, the vertical conveyance portion 452 conveys the grains from a lower end portion thereof connected to the outlet of the horizontal conveyance portion 451 to an upper end portion thereof connected to the introduction portion 453, whereby the vertical conveyance portion 452 further conveys the grains conveyed by the horizontal conveyance portion 451, upward along the upper-lower direction D3.

The introduction portion 453 is connected to the outlet (upper end portion) of the vertical conveyance portion 452, and introduces the grains conveyed through the vertical conveyance portion 452 into the grain tank 2. That is, the grains conveyed to the upper end portion of the vertical conveyance portion 452 are introduced into the grain tank 2 at the introduction portion 453. As a result, the grains are conveyed from the sorting device 432 to the introduction portion 453 by the horizontal conveyance portion 451 and the vertical conveyance portion 452, and are introduced into the grain tank 2 at the introduction portion 453.

The grain tank 2 is a tank (container) that stores threshed product (grains and the like) obtained through the threshing processing in the threshing device 431 and through the sorting processing in the sorting device 432, that is, a harvesting target in the harvesting machine 4. The grain tank 2 is arranged side by side in the left-right direction D1, which is the width direction of the machine body 40, with respect to the threshing device 431. In the present embodiment, as an example, when the machine body 40 is viewed in such a manner that the machine body 40 is divided into substantially equal two parts in the left-right direction D1, the threshing device 431 (and the sorting device 432) is located in a left side part of the machine body 40, and the grain tank 2 is located in a right side part of the machine body 40.

Here, the vertical conveyance portion 452 and the introduction portion 453 of the conveyance device 45 are disposed between the threshing device 431 and the grain tank 2 in the left-right direction D1. Therefore, the introduction portion 453 introduces the grains into the grain tank 2 from an introduction port formed on a side surface (left side surface), of the grain tank 2, on a side facing the threshing device 431.

The discharge device 49 discharges a harvesting target (grains in the present embodiment) in the grain tank 2 to a freely selected place around the harvesting machine 4. The discharge device 49 includes a discharge conveyance path 490, conveyance mechanisms 493, and the like. The discharge conveyance path 490 is a path for discharging contents (grains) stored in the grain tank 2. The discharge conveyance path 490 includes a vertical conveyance path 491 extending in the upper-lower direction D3 and a horizontal conveyance path 492 extending in a direction (horizontal direction) orthogonal to the upper-lower direction D3. The vertical conveyance path 491 is located rearward of the grain tank 2. The vertical conveyance path 491 includes a lower end portion connected to the grain tank 2, and an upper end portion connected to the horizontal conveyance path 492. Thus, the contents (harvesting target) stored in the grain tank 2 are conveyed upward through the vertical conveyance path 491, are further conveyed in the horizontal direction through the horizontal conveyance path 492, and are discharged from a distal end portion of the horizontal conveyance path 492.

The conveyance mechanisms 493 are, for example, screws that convey the grains through the discharge conveyance path 490 by rotating in the discharge conveyance path 490. That is, in the vertical conveyance path 491, the screw serving as the conveyance mechanism 493 rotates to convey the grains, and in the horizontal conveyance path 492, the screw serving as the conveyance mechanism 493 rotates to convey the grains.

In particular, the horizontal conveyance path 492 includes a discharge portion 494 at the distal end portion (front end portion) thereof, and forms a discharge auger that discharges the harvesting target (grains) to the outside through the discharge portion 494. The horizontal conveyance path 492 serving as the discharge auger is configured to be capable of performing rotation in plan view (hereinafter, also referred to as "horizontal rotation") and rotation in side view (hereinafter, also referred to as "vertical rotation"), with an end portion (rear end portion) on a side opposite to the discharge portion 494 in a long-side direction, as a support portion 495 (see Fig. 2).

Thus, the position of the discharge portion 494 in plan view changes with the horizontal rotation (turning) of the horizontal conveyance path 492, and the height of the discharge portion 494 in side view changes with the vertical rotation (displacement of an angle of elevation or depression) of the horizontal conveyance path 492. Therefore, the horizontal conveyance path 492 serving as the discharge auger can be driven with the support portion 495 as pivot points, and the discharge portion 494 at the distal end portion of the horizontal conveyance path 492 can be moved to a freely selected position.

The support portion 495 is located at a portion, in the horizontal conveyance path 492, connected to the vertical conveyance path 491, that is, at the upper end portion of the vertical conveyance path 491. That is, the horizontal conveyance path 492 can perform the rotation in plan view (horizontal rotation) and the rotation in side view (vertical rotation) about the support portion 495 located further rearward of the grain tank 2 located rearward of the driving part 47. Thus, the position of the discharge portion 494 at the distal end portion (front end portion) of the horizontal conveyance path 492 three-dimensionally changes in a polar coordinate system in which the support portion 495 serves as a pole.

More specifically, the horizontal conveyance path 492 performs the horizontal rotation about a first rotation axis Ax1 (see Fig. 3) that is along the upper-lower direction D3, and performs the vertical rotation about a second rotation axis Ax2 (see Fig. 3) that is along the horizontal plane. The first rotation axis Ax1 is located on an extension line of the center axis of the vertical conveyance path 491, and the second rotation axis Ax2 is located on a straight line that passes through the upper end portion of the vertical conveyance path 491 and that is orthogonal to the first rotation axis Ax1. An intersection of the first rotation axis Ax1 and the second rotation axis Ax2 serves as the support portion 495.

In short, the harvesting machine 4 includes the horizontal conveyance path 492 having a length along a horizontal plane. The horizontal conveyance path 492 can perform rotation (horizontal rotation) about the support portion 495 located on a rear side relative to the driving part 47, at least in plan view. In addition, the horizontal conveyance path 492 discharges the harvesting target from an end portion (discharge portion 494) on a side opposite to the support portion 495.

The waste straw conveyance device 44 conveys waste such as waste straw (straw) and the like to the waste straw processing device 48. That is, straw and the like separated from the threshed product (including grains) in the threshing processing in the threshing device 431 are conveyed from the threshing device 431 to the waste straw processing device 48 as waste by the waste straw conveyance device 44.

The waste straw processing device 48 discharges waste such as waste straw and the like generated in the threshing processing. The waste straw processing device 48 has a discharge port 481 (see Fig. 1) for discharging the waste to the outside of the machine body 40. The waste straw processing device 48 is disposed, for example, rearward of the threshing device 431, that is, in a left rear part of the machine body 40 and on a lower side of the waste straw conveyance device 44. In the waste straw processing device 48, the discharge port 481 opens toward a lower side. The waste straw processing device 48 includes a waste straw cutter and the like, and discharges the waste through the discharge port 481 after performing cutting processing and the like on the waste. However, it is not necessarily required that the waste straw processing device 48 performs the cutting processing and the like.

The power part 46 is a drive source for the travel device 41, the reaping part 42, the threshing device 431, the sorting device 432, the conveyance device 45, the waste straw processing device 48, the waste straw conveyance device 44, the discharge device 49, and the like. The power part 46 includes an engine such as a diesel engine, as a power source. The power part 46 may include a hybrid power source including an engine and a motor (electrical motor).

The driving part 47 is provided with a driver's seat 471 on which an operator (operation person) sits, and operation devices 472 such as a steering wheel operated by the operation person, various operation levers, and various operation switches. In the present embodiment, the driving part 47 is disposed in front of the grain tank 2 (see Fig. 2) in the right side part of the machine body 40 of the harvesting machine 4.

Here, types of the driving part 47 of the harvesting machine 4 include a cabin type, a canopy type, a floor type, and the like. The driving part 47 of the cabin type includes a cabin, and the operator rides in a cabin space inside the cabin. The driving part 47 of the canopy type includes a canopy (roof), and the operator rides in a space below the canopy. The driving part 47 of the floor type does not include a cabin, a canopy, or the like, and the operator rides in a space opened upward. In the present embodiment, as an example, a case in which the driving part 47 is the floor type will be described as an example.

The fuel tank 3 is mounted on the machine body frame 401, while being located rearward of the sorting device 432 and below the waste straw processing device 48. The battery is mounted on the machine body frame 401, while being located rearward of the grain tank 2 and below the waste straw processing device 48.

The electrical components include, for example, a control device, a headlight, a display portion such as a meter, an engine starting motor, a communication device, various sensors, and the like, with which the harvesting machine 4 is equipped. The electrical components are devices that operate by receiving electrical power supplied from the battery.

The control device controls the travel device 41, the reaping part 42, the threshing device 431, the sorting device 432, the conveyance device 45, the power part 46, the waste straw processing device 48, the waste straw conveyance device 44, the discharge device 49, and the like, in response to operation received by the operation devices. The control device mainly includes a computer system including one or more processors such as a central processing unit (CPU) and one or more memories such as a read only memory (ROM) and a random access memory (RAM), and executes various types of processing (information processing). In the present embodiment, the control device is an integrated controller that controls the entire harvesting machine 4, and includes, for example, an electronic control unit (ECU).

Here, the control device performs at least driving control on the horizontal rotation and the vertical rotation of the horizontal conveyance path 492, as control on the discharge device 49. Thus, the control device can drive the horizontal conveyance path 492 to move the discharge portion 494 at the distal end portion of the horizontal conveyance path 492 to a freely selected position.

### [2] Configurations of and around antenna device

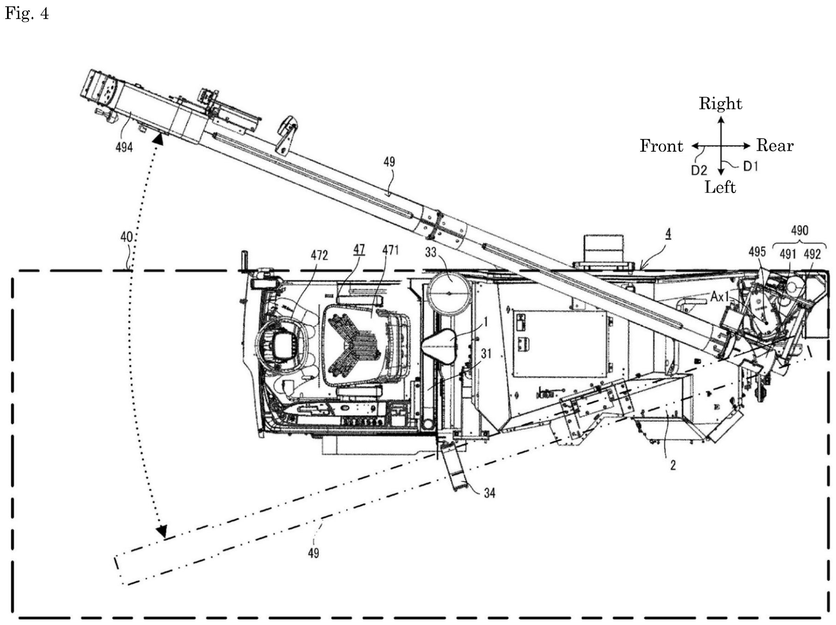

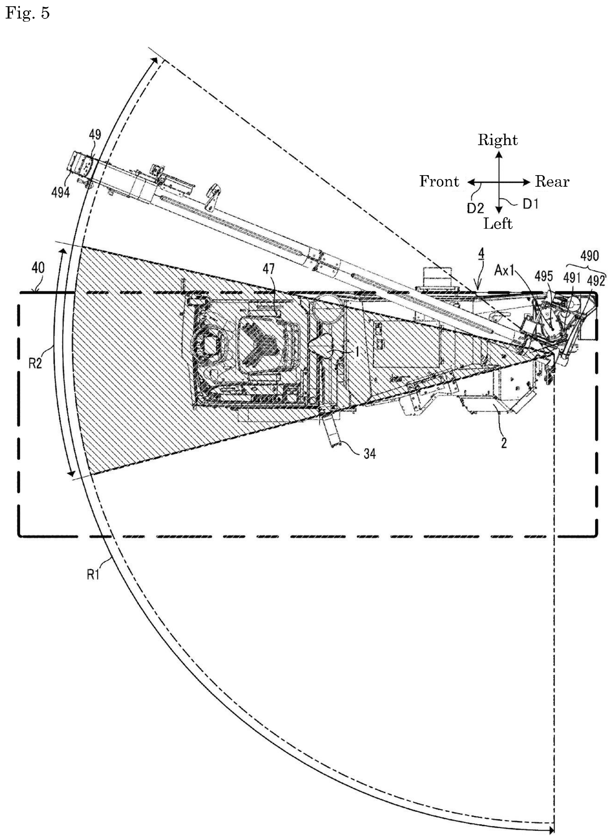

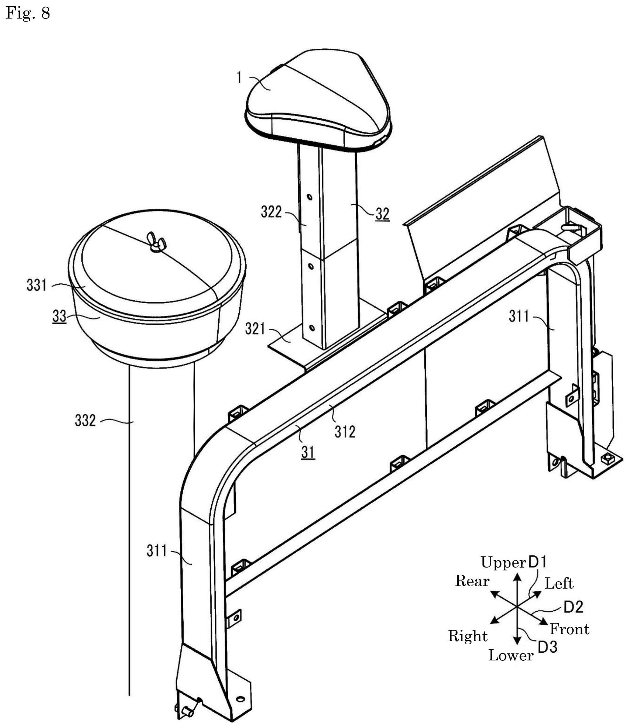

Next, configurations of and around the antenna device 1 in the harvesting machine 4 according to the present embodiment will be described with reference to Figs. 3 to 8. In Figs. 3 to 7, illustration other than the illustration of and around the antenna device 1 is omitted. Specifically, illustration of the travel device 41, the reaping part 42, the threshing device 431, the sorting device 432, the conveyance device 45, the power part 46, the waste straw processing device 48, the waste straw conveyance device 44, and the like is omitted. In addition to the above omission, illustration of the grain tank 2, the driver's seat 471, and the like is further omitted in Fig. 8. Further, in each of Figs. 4 and 5, a schematic outer shape of the machine body 40 of the harvesting machine 4 is indicated by an imaginary line (long dashed and double-short dashed line).

As shown in Fig. 3, the harvesting machine 4 according to the present embodiment includes the antenna device 1 and peripheral structures such as the support structure of the antenna device 1, in addition to the configurations of the harvesting machine 4 (see Figs. 1 and 2) according to the basic configuration described above. The antenna device 1 is supported by the machine body 40 through a support frame 32. Here, the antenna device 1 is disposed rearward of the driving part 47 in the machine body 40.

That is, the harvesting machine 4 according to the present embodiment includes the machine body 40 including the driving part 47, and the antenna device 1 supported by the machine body 40. The antenna device 1 includes an antenna element that is an electrical element used for reception and/or transmission of electromagnetic waves (including radio waves) and the like, a circuit (reception circuit and/or transmission circuit) electrically connected to the antenna element, and the like. In particular, in the present embodiment, the antenna device 1 is unitized by housing various components in a case having a substantially triangular shape in plan view.

Here, the antenna device 1 is an antenna device that measures the current position of the machine body 40. That is, the antenna device 1 has a function as a positioning device that measures the current position (latitude, longitude, altitude, and the like) of the harvesting machine 4. The current position of the machine body 40 measured by the antenna device 1 can be used for, for example, automated travel of the harvesting machine 4 along a target path, precision agriculture in which the farm field is managed by associating the quality of a harvesting target (grains) with a reaping position, and/or the like.

More specifically, the antenna device 1 detects the current position, the current bearing, and the like of the machine body 40 by using a satellite positioning system such as a global navigation satellite system (GNSS). By locating the current position, the current bearing, and the like of the machine body 40, it is possible to perform, for example, automated travel (automated driving) of the harvesting machine 4, management of a work status (progress or the like) including recording of a travel track of the harvesting machine 4, or the like. The automated driving of the harvesting machine 4 described here includes "autonomous travel" in which the harvesting machine 4 autonomously travels without operation of the operator, and "semi-automated travel" in which only steering is automated like straight travel assistance, for example. In the "semi-automated travel", although the harvesting machine 4 is not capable of traveling without the operation of the operator, a burden on the operator for steering can be reduced, and the harvesting machine 4 can travel along a target path such as a straight path, which lead to improvement in work efficiency.

The antenna device 1 receives a satellite signal (GNSS signal or the like) from a positioning satellite of the satellite positioning system such as the GNSS. That is, the antenna device 1 is a position locating antenna for locating the position of the machine body 40, and executes positioning processing for locating (calculating) the current position, the current bearing, and the like of the machine body 40 by using the satellite signal transmitted from the satellite. The antenna device 1 includes an inertial sensor, and can also detect an orientation such as the current bearing of the machine body 40.

The antenna device 1 may include, for example, a mobile phone terminal, a smartphone, a tablet terminal, a quantum compass, or the like. Here, the antenna device 1 is disposed at an upper surface (top surface) of the machine body 40 in such a manner as to facilitate the reception of the signal (GNSS signal or the like) from the satellite.

As shown in Fig. 3, such an antenna device 1 is supported by the support frame 32 fixed to a frame 31 disposed rearward of the driver's seat 471 of the driving part 47. The support frame 32 is disposed rearward of the frame 31 and in front of the grain tank 2, that is, between the frame 31 and the grain tank 2 in the front-rear direction D2. The support frame 32 supports the antenna device 1 at an upper end portion of the support frame 32.

In between the frame 31 and the grain tank 2 in the front-rear direction D2, a pre-cleaner included in a supply path 33 through which air is supplied to the engine serving as a power source 16, and the like are disposed. The supply path 33 is located rightward as viewed from the antenna device 1. That is, the supply path 33 and the antenna device 1 are arranged side by side in the left-right direction D1, in the rear of (the frame 31 of) the driving part 47 in the machine body 40.

In addition, the harvesting machine 4 according to the present embodiment further includes an auger rest 34. The auger rest 34 holds the horizontal conveyance path 492 serving as the discharge auger, when the discharge device 49 is not used. The auger rest 34 has a substantially U-shape opened upward, and supports the horizontal conveyance path 492 when the horizontal conveyance path 492 is lowered from above the auger rest 34. The auger rest 34 is disposed on a side (that is, the left side) opposite to the supply path 33 in the left-right direction D1, as viewed from the antenna device 1.

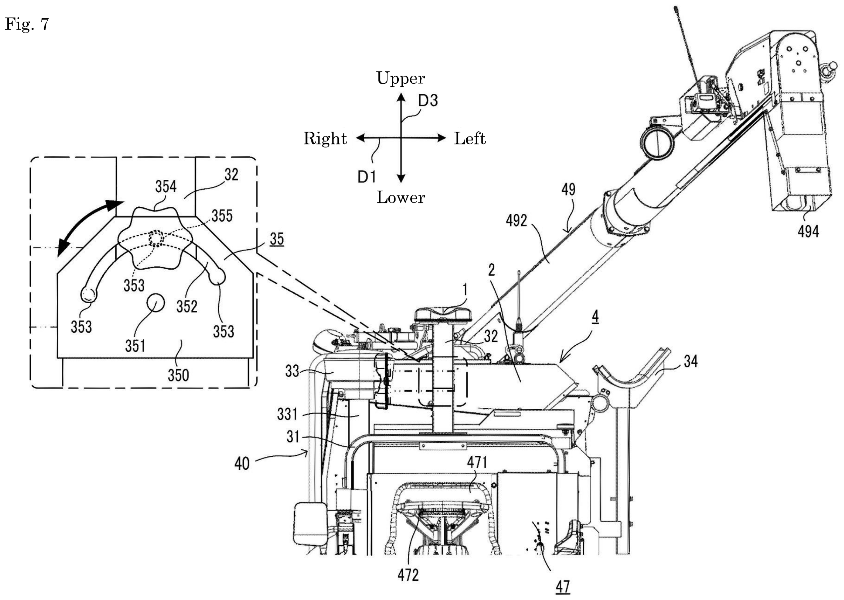

Here, respective upper ends of the antenna device 1 and the supply path 33 located rearward of the frame 31 are both located higher than an upper end of the frame 31 of the driving part 47. In the present embodiment, the respective upper ends of the antenna device 1 and the supply path 33 are located higher than an upper end of the grain tank 2. A lower end of the antenna device 1 is located higher than the upper end of the supply path 33 (see Fig. 7). Therefore, the horizontal conveyance path 492 as the discharge auger movable above the driving part 47 is configured such that at least a lower end of the horizontal conveyance path 492 can be raised to a position higher than the upper end of the antenna device 1 by the vertical rotation, which allows avoidance of interference with the antenna device 1, the supply path 33, and the like.

Fig. 3 shows a state in which the horizontal conveyance path 492 is at a "raised position" (the upper part of Fig. 3) and a state in which the horizontal conveyance path 492 is at a "lowered position" (the lower part of Fig. 3). The horizontal conveyance path 492 is movable between the raised position and the lowered position by moving the distal end portion (discharge portion 494) thereof in the upper-lower direction D3 through the vertical rotation. The raised position is a position of the horizontal conveyance path 492 at which interference with the antenna device 1 or the like can be avoided during the horizontal rotation of the horizontal conveyance path 492. The lowered position is a position of the horizontal conveyance path 492 formed when the horizontal conveyance path 492 is lowered from the raised position through the vertical rotation of the horizontal conveyance path 492 and is caused to be supported by the auger rest 34.

Incidentally, as shown in Fig. 4, the antenna device 1 is disposed at a position between the driving part 47 and the support portion 495, in plan view. The "position between the driving part 47 and the support portion 495" here means a position on a line segment connecting the driving part 47 and the support portion 495, in plan view. Here, the driving part 47 has a certain size (area), and thus there are many line segments connecting the driving part 47 and the support portion 495. Therefore, in plan view, each of all the positions in a triangular area in which an end edge (rear end edge), on the support portion 495 side, in the driving part 47 is set as a base and the support portion 495 is set as a vertex corresponds to the "position between the driving part 47 and the support portion 495".

As described above, in the present embodiment, the antenna device 1 is disposed at the position between the driving part 47 and the support portion 495, in plan view. According to this configuration, the view of the operator riding on the driving part 47 is less likely to be blocked by the antenna device 1 and the support frame 32, as compared with a case in which the antenna device 1 and the support frame 32 (supporting the antenna device 1) are disposed in a front part of the driving part 47. As a result, it is purposed to provide the harvesting machine 4 in which a blind spot is less likely to occur.

Moreover, when the horizontal conveyance path 492 is located above the driving part 47, the horizontal conveyance path 492 is usually at the raised position where the distal end portion (discharge portion 494) of the horizontal conveyance path 492 is raised, in order to avoid contact between the horizontal conveyance path 492 and the operator (and the grain tank 2). Further, in a state where the horizontal conveyance path 492 is located above the driving part 47, the reaping part 42 is located below the discharge portion 494. Therefore, in this state, it is not possible to place a truck, a grain sack, or the like, which is a discharge destination of a harvesting target, below the discharge portion 494, and anyway, the harvesting target is not discharged, and thus it is unnecessary to lower the horizontal conveyance path 492.

Therefore, even when the height of the antenna device 1 disposed at the position between the driving part 47 and the support portion 495 is set relatively high, it is possible to avoid a situation in which the horizontal conveyance path 492 comes into contact with the antenna device 1. As a result, it is possible to make an installation height of the antenna device 1 relatively high, and it is easy to create a situation in which no shielding object exists above the antenna device 1, and thus the reliability of signal reception in the antenna device 1 is improved.

Incidentally, in the present embodiment, as shown in Fig. 5, a restricted area R2 in which lowering operation of the horizontal conveyance path 492 is restricted is set, in a part of a movable range R1 of the horizontal conveyance path 492 in plan view. The antenna device 1 is disposed in the restricted area R2.

That is, as described above, when the horizontal conveyance path 492 is located above the driving part 47, the horizontal conveyance path 492 is desirably at the raised position where the distal end portion (discharge portion 494) of the horizontal conveyance path 492 is raised, in order to avoid contact between the horizontal conveyance path 492 and the operator (and the grain tank 2). Therefore, in the movable range R1 of the horizontal conveyance path 492, an area in which the horizontal conveyance path 492 is located above the driving part 47 is set as the restricted area R2. In the restricted area R2, the lowering operation of the horizontal conveyance path 492 is restricted (regulated), whereby the horizontal conveyance path 492 is maintained at the raised position, in the restricted area R2. The restriction on the lowering operation of the horizontal conveyance path 492 in the restricted area R2 may be performed by using software in the control device, or may be performed by hardware using a mechanism or the like.

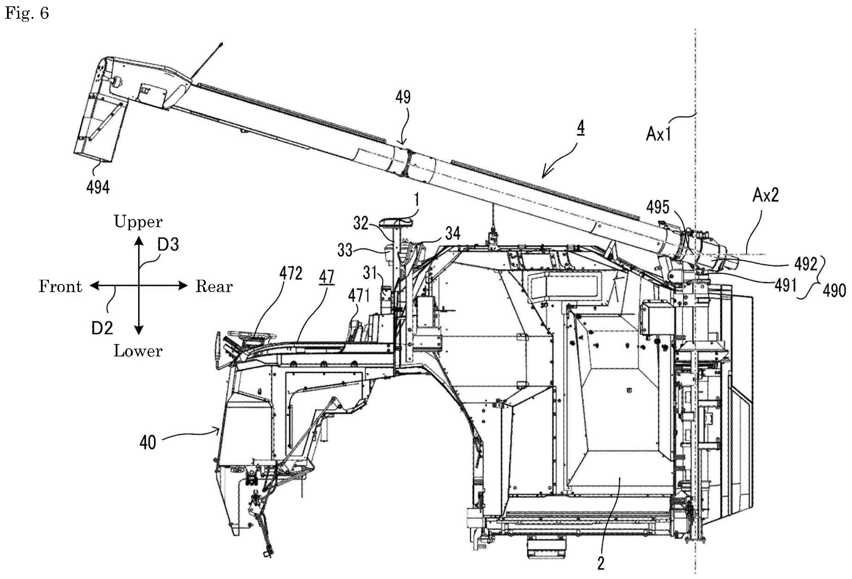

Moreover, by causing the antenna device 1 to be located in such a restricted area R2, it is possible to avoid a situation in which the horizontal conveyance path 492 comes into contact with the antenna device 1, even when the height of the antenna device 1 is made relatively high. That is, as shown in Fig. 6, by restricting the lowering operation of the horizontal conveyance path 492 and causing the horizontal conveyance path 492 to be maintained at the raised position, it is possible to avoid contact between the horizontal conveyance path 492 and the antenna device 1, even when the horizontal conveyance path 492 performs the horizontal rotation. As a result, it is possible to make an installation height of the antenna device 1 relatively high, and it is easy to create a situation in which no shielding object exists above the antenna device 1, and thus the reliability of signal reception in the antenna device 1 is improved.

In addition, in the movable range R1 of the horizontal conveyance path 492 in plan view, the machine body 40 includes the auger rest 34 that can hold the horizontal conveyance path 492. Here, the antenna device 1 is disposed at a position away from the auger rest 34 in the rotation direction of the horizontal conveyance path 492, in plan view. That is, the machine body 40 is provided with the auger rest 34 that holds the horizontal conveyance path 492 serving as the discharge auger when the discharge device 49 is not used. Moreover, in the rotation (horizontal rotation) direction of the horizontal conveyance path 492, the antenna device 1 and the auger rest 34 are disposed away from each other.

In short, at a position overlapping the auger rest 34 in plan view, the horizontal conveyance path 492 is required to be lowered to the lowered position so as to be held by the auger rest 34. Therefore, at least at the position overlapping the auger rest 34 in plan view, it is necessary to release the restriction on the lowering operation of the horizontal conveyance path 492 as described above. In the rotation (horizontal rotation) direction of the horizontal conveyance path 492, if the auger rest 34 and the antenna device 1 are disposed while they are not away from each other, there is a possibility that the horizontal conveyance path 492 comes into contact with the antenna device 1, when the restriction on the lowering operation of the horizontal conveyance path 492 is released for the purpose of allowing the auger rest 34 to hold the horizontal conveyance path 492. In contrast, in the present embodiment, since the auger rest 34 and the antenna device 1 are disposed away from each other in the rotation (horizontal rotation) direction of the horizontal conveyance path 492, it is easy to avoid contact between the horizontal conveyance path 492 and the antenna device 1.

In addition, as shown in Fig. 7, the antenna device 1 can change its orientation between a first orientation that is an orientation when the antenna device 1 is used and a second orientation that is an orientation when the antenna device 1 is not used. In Fig. 7, the antenna device 1 in the second orientation is indicated by an imaginary line (dashed double-dotted line). In the example of Fig. 7, the support frame 32 is configured such that the support frame 32 can be angled at a middle portion thereof. Thus, switching can be made between a state (first orientation) in which an upper surface of the antenna device 1 is directed upward and a state (second orientation) in which the antenna device 1 is tilted and the upper surface of the antenna device 1 is directed to a side (right side as an example).

Specifically, the harvesting machine 4 includes an orientation changing part 35 (see a balloon in Fig. 7) that changes the orientation of the antenna device 1 between the first orientation and the second orientation. The orientation changing part 35 shown in the balloon in Fig. 7 includes a support plate 350 that supports an upper part of the support frame 32 and a knob 354. The support plate 350 is fixed to an upper end of a lower part of the support frame 32.

The support plate 350 rotatably supports the upper part of the support frame 32 about a pivot point 351. The support plate 350 is formed with a long hole 352 penetrating the support plate 350 in its thickness direction. The long hole 352 has an arc shape centered on the pivot point 351, and has broadened portions 353 formed to be broad at both end portions and a middle portion in an extending direction of the long hole 352.

The knob 354 fastens the upper part of the support frame 32 and the support plate 350 by being tightened to the upper part of the support frame 32 via the long hole 352. Here, a cylindrical portion 355 of the knob 354 has a diameter capable of passing through only the broadened portions 353 in the long hole 352. Therefore, the knob 354 can be fastened to the upper part of the support frame 32 only at the broadened portions 353 in the long hole 352. In other words, the upper part of the support frame 32 can be fixed only at positions corresponding to the broadened portions 353. By tightening the knob 354 using the broadened portion 353 at the middle portion in the extending direction of the long hole 352, the antenna device 1 is held in the first orientation, and by tightening the knob 354 using the broadened portion 353 at each of both end portions in the extending direction of the long hole 352, the antenna device 1 is held in the second orientation.

In the present embodiment, as an example, the upper end of the antenna device 1 in the first orientation is located at a position higher than the upper end of the supply path 33. The upper end of the antenna device 1 in the second orientation is located at a position lower than the upper end of the supply path 33. Therefore, when the antenna device 1 is retracted to the second orientation, a total height of the machine body 40 can be kept equal to that of a harvesting machine not including the antenna device 1.

According to this configuration, it is possible to keep a total height of the machine body 40 including the height of the antenna device 1 lower by changing the orientation of the antenna device 1 to the second orientation, while setting the height of the antenna device 1 in the first orientation relatively high.

In addition, in the present embodiment, as an example, as shown in Fig. 8, the support frame 32, which supports the antenna device 1, is fixed to an upper end portion of the frame 31 of the driving part 47 and a substantially middle portion of the frame 31 in the left-right direction D1.

Specifically, the frame 31 includes a pair of vertical frames 311 and a connection frame 312. The pair of vertical frames 311 each have a length in the upper-lower direction D3, and are disposed away from each other in the left-right direction D1, in the rear of the driver's seat 471. The connection frame 312 connects respective upper end portions of the pair of vertical frames 311. Therefore, the frame 31 is formed in a substantially inverted U shape opened toward a lower side, as a whole.

The support frame 32 includes a stay portion 321 and a pillar portion 322. The stay portion 321 is, for example, a substantially L-shaped angled bracket, and is fixed to a substantially middle portion of the connection frame 312 in the length direction thereof (left-right direction D1). The pillar portion 322 is fixed to the stay portion 321 in a form protruding upward from an upper surface of the stay portion 321. The antenna device 1 is supported by the support frame 32 by being fixed to an upper end portion of the pillar portion 322.

Here, the frame 31 has a function as a ROPS frame that protects the operator when the harvesting machine 4 rolls over. Therefore, the connection frame 312 forming the upper end portion of the frame 31 is located at a position higher than at least the head of the operator sitting on the driver's seat 471. At the rear of such a frame 31, a gap for disposing the supply path 33 and the like is allocated between the frame 31 and the grain tank 2. The support frame 32 is attached to a rear surface of the connection frame 312 in a manner to utilize this gap.

In this manner, in the present embodiment, the driving part 47 includes the pair of vertical frames 311 having a length in the upper-lower direction D3, and the connection frame 312 connecting the respective upper end portions of the pair of vertical frames 311. The antenna device 1 is supported by the connection frame 312. That is, the antenna device 1 is directly or indirectly supported by the connection frame 312 of the frame 31. Thus, the antenna device 1 can be firmly fixed by using the existing structure (frame 31).

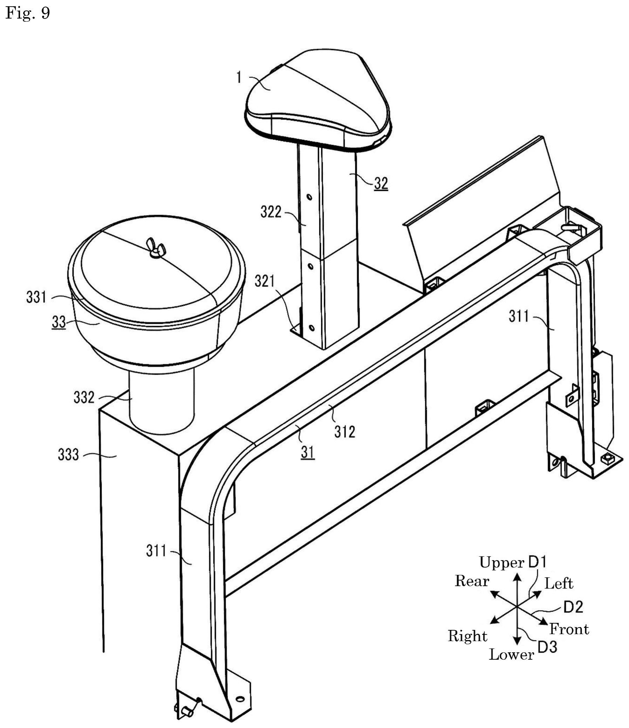

Further, as another example, as shown in Fig. 9, the antenna device 1 may be directly or indirectly supported by the supply path 33. Specifically, the supply path 33 includes a resonator 331, a pipe 332, and a box 333. The pipe 332 extends toward a lower side from the resonator 331, and is connected to the box 333. A flow path for air is formed inside the box 333, and the flow path connects the pipe 332 to the engine serving as the power source 16. For example, the antenna device 1 is supported by at least one of the resonator 331, the pipe 332, or the box 333, through the support frame 32. In the example of Fig. 9, the support frame 32 is fixed to the box 333 at the stay portion 321 so as to protrude from an upper surface of the box 333.

In short, the machine body 40 includes the supply path 33 that is disposed rearward of the driving part 47 and through which air is supplied to the power source 16. The antenna device 1 may be supported by the supply path 33. With this configuration, the antenna device 1 can be fixed at a relatively high position by using the existing structure (supply path 33).

### [3] Modifications

Modifications of the first embodiment will be described one by one below. The modifications described below can be applied in combination as appropriate.

Further, the harvesting machine 4 is not limited to the head-feeding combine. The harvesting machine 4 may be a normal combine, or may be a harvesting machine other than a combine.

Further, it is not necessarily required that the threshing device 431 is located in the left side part of the machine body 40 and the grain tank 2 is located in the right side part of the machine body 40 when the machine body 40 is viewed in such a manner that the machine body 40 is divided into substantially equal two parts in the left-right direction D1. For example, the grain tank 2 may be located in the left side part of the machine body 40, and the threshing device 431 may be located in the right side part of the machine body 40.

Further, it is not necessarily required that the harvesting machine 4 is provided with the grain tank 2. The harvesting machine 4 may be, for example, a harvesting machine of a type in which the grain tank 2 is not provided and grains are directly discharged into a grain sack, as in a harvesting machine with a specification of a top sacker.

Further, the antenna device 1 may have a communication function in addition to or instead of the positioning function for the current position of the machine body 40. That is, the antenna device 1 may be, for example, a communication antenna for performing wireless communication via a communication network such as a public phone line, a mobile phone line network, a packet line network, or a wireless local area network (LAN).

Further, the driving part 47 is not limited to the floor type, and may be, for example, a canopy type, a cabin type, or the like. In the case of the driving part 47 of the canopy type, a canopy (roof) is fixed to the frame 31.

### [Additional Notes of Invention]

Outlines of the invention extracted from the embodiment described above will be additionally described below. Note that configurations and processing functions, which will be described in the following additional notes, can be selected and freely combined.

### <Additional Note 1>

A harvesting machine including:
a machine body that includes a driving part;
a horizontal conveyance path that has a length along a horizontal plane, that is rotatable about a support portion located on a rear side relative to the driving part, in plan view, and that discharges a harvesting target from an end portion on a side opposite to the support portion; and
an antenna device that is supported by the machine body,
in which the antenna device is disposed at a position between the driving part and the support portion, in plan view.

### <Additional Note 2>

The harvesting machine according to Additional Note 1, in which
a restricted area in which lowering operation of the horizontal conveyance path is restricted is set, in a part of a movable range of the horizontal conveyance path in plan view, and
the antenna device is disposed in the restricted area.

### <Additional Note 3>

The harvesting machine according to Additional Note 1 or 2, in which
the machine body includes an auger rest that is capable of holding the horizontal conveyance path, in a movable range of the horizontal conveyance path in plan view, and
the antenna device is disposed at a position away from the auger rest in a rotation direction of the horizontal conveyance path, in plan view.

### <Additional Note 4>

The harvesting machine according to any one of Additional Notes 1 to 3, in which
the driving part includes a pair of vertical frames that have a length in an upper-lower direction, and a connection frame that connects respective upper end portions of the pair of vertical frames, and
the antenna device is supported by the connection frame.

### <Additional Note 5>

The harvesting machine according to any one of Additional Notes 1 to 4, in which
the machine body includes a supply path that is disposed rearward of the driving part, and through which air is supplied to a power source, and
the antenna device is supported by the supply path.

### <Additional Note 6>

The harvesting machine according to any one of Additional Notes 1 to 5, in which the antenna device is capable of changing an orientation of the antenna device between a first orientation that is an orientation when the antenna device is used and a second orientation that is an orientation when the antenna device is not used.

### <Additional Note 7>

The harvesting machine according to any one of Additional Notes 1 to 6, in which the antenna device is an antenna device that measures a current position of the machine body.

### LIST OF REFERENCE SIGNS

- 1: Antenna device
- 33: Supply path
- 34: Auger rest
- 40: Machine body
- 47: Driving part
- 311: Vertical frame
- 312: Connection frame
- 492: Horizontal conveyance path
- 495: Support portion
- R1: Movable range
- R2: Restricted area
- D3: Upper-lower direction

## Claims

1. A harvesting machine comprising:
a machine body that includes a driving part;
a horizontal conveyance path that has a length along a horizontal plane, that is rotatable about a support portion located on a rear side relative to the driving part, in plan view, and that discharges a harvesting target from an end portion on a side opposite to the support portion; and
an antenna device that is supported by the machine body,
wherein the antenna device is disposed at a position between the driving part and the support portion, in plan view.

2. The harvesting machine according to claim 1, wherein
a restricted area in which lowering operation of the horizontal conveyance path is restricted is set, in a part of a movable range of the horizontal conveyance path in plan view, and
the antenna device is disposed in the restricted area.

3. The harvesting machine according to claim 1 or 2, wherein
the machine body includes an auger rest that is capable of holding the horizontal conveyance path, in a movable range of the horizontal conveyance path in plan view, and
the antenna device is disposed at a position away from the auger rest in a rotation direction of the horizontal conveyance path, in plan view.

4. The harvesting machine according to claim 1 or 2, wherein
the driving part includes a pair of vertical frames that have a length in an upper-lower direction, and a connection frame that connects respective upper end portions of the pair of vertical frames, and
the antenna device is supported by the connection frame.

5. The harvesting machine according to claim 1 or 2, wherein
the machine body includes a supply path that is disposed rearward of the driving part, and through which air is supplied to a power source, and
the antenna device is supported by the supply path.

6. The harvesting machine according to claim 1 or 2, wherein the antenna device is capable of changing an orientation of the antenna device between a first orientation that is an orientation when the antenna device is used and a second orientation that is an orientation when the antenna device is not used.

7. The harvesting machine according to claim 1 or 2, wherein the antenna device is an antenna device that measures a current position of the machine body.
